# EUROPÄISCHE PATENTANMELDUNG

(11) **EP 1 475 270 A2**
(43) Veröffentlichungstag der Anmeldung: **10.11.2004**
(21) Anmeldenummer: 04009844.4
(22) Anmeldetag: 26.04.2004
(51) Int. Cl.: B60Q 5/00

(54) **Baugruppe mit einem Lenkrad und einem Gassackmodul**

(30) Priorität: 07.05.2003 DE 20307096 U
(71) Anmelder: TRW Automotive Safety Systems GmbH, 63743 Aschaffenburg (DE)
(72) Erfinder: Schneider, Michael, Dr., 63834 Sulzbach (DE); Helmstetter, Matthias, 63743 Aschaffenburg (DE); Müller, Toralf, 04827 Machern (DE)
(74) Vertreter: Kitzhofer, Thomas, Dipl.-Ing.

(57) **Zusammenfassung**

Eine Baugruppe umfaßt ein Lenkrad (12) und ein in einem Nabenbereich (13) des Lenkrads (12) aufgenommenes Gassackmodul (10), das zum Betätigen einer Hupe in Achsrichtung (z) des Lenkrads (12) bewegbar ist. Es ist wenigstens ein Rückstellelement (22) vorgesehen, das wenigstens einen elastischen Abschnitt (26) aufweist, der eine entgegen einer Betätigungskraft für die Hupe wirkende Rückstellkraft auf das Gassackmodul (10) ausübt. Der elastische Abschnitt (26) erstreckt sich zwischen einem Modulgehäuse (14) und einer im Nabenbereich (13) des Lenkrads (12) vorgesehenen Befestigung (34) für das Rückstellelement (22), ist fest und nicht verschiebbar an einem Ende (27) mit dem Modulgehäuse (14) und an einem anderen Ende (28) mit der Befestigung (34) im Nabenbereich (13) verbunden und weist zwischen den Enden (27, 28) einen Kontaktabschnitt (30) auf, der einen elektrischen Hupkontakt bildet.

## Beschreibung

Die Erfindung betrifft eine Baugruppe mit einem Lenkrad und einem Gassackmodul.

Bei in einem Nabenbereich des Lenkrads aufgenommenen Gassackmodulen, die zum Betätigen einer Hupe in Achsrichtung des Lenkrads entgegen einer Rückstellkraft bewegbar sind (auch als "Floating-Horn"-Module bezeichnet), besteht das Bestreben, die Zahl der Bauteile nach Möglichkeit gering zu halten, während gleichzeitig eine spielfreie Führung des Gassackmoduls in dessen Bewegungsrichtung gewährleistet sein muß.

Die Erfindung schafft eine einfache Baugruppe, die diese Erfordernisse erfüllt.

Hierzu erstreckt sich bei einer Baugruppe mit einem Lenkrad und einem in einem Nabenbereich des Lenkrads aufgenommenen Gassackmodul, das zum Betätigen einer Hupe in Achsrichtung des Lenkrads bewegbar ist, und mit wenigstens einem Rückstellelement, das wenigstens einen elastischen Abschnitt aufweist, der eine entgegen einer Betätigungskraft für die Hupe wirkende Rückstellkraft auf das Gassackmodul ausübt, der elastische Abschnitt zwischen einem Modulgehäuse und einer im Nabenbereich des Lenkrads vorgesehenen Befestigung. Der elastische Abschnitt ist fest und nicht verschiebbar an einem Ende mit dem Modulgehäuse und an einem anderen Ende mit der Befestigung im Nabenbereich verbunden und weist zwischen den Enden einen Kontaktabschnitt auf, der einen elektrischen Hupkontakt bildet. Da einer der Hupkontakte damit bereits fest vorgegeben ist, muß nur jeweils ein zu diesem Hupkontakt komplementärer Hupkontakt im Lenkrad bzw. am Gassackmodul plaziert werden, was den Herstellungs- und Montageaufwand gering hält. Hieraus ergibt sich auch eine hohe Gestaltungsfreiheit, da die Anordnung des Kontaktabschnitts am elastischen Abschnitt den jeweiligen Anforderungen entsprechend gewählt werden und der elastische Abschnitt bzw. der Kontaktabschnitt selbst eine relative große Ausdehnung aufweisen kann. Die feste Verbindung des elastischen Abschnitts sowohl mit dem Gassackmodul als auch mit dem Lenkrad bewirkt zudem eine sichere und spielarme Führung des Gassackmoduls bei der Betätigung der Hupe.

Insgesamt können mehrere elastische Abschnitte, mehrere Kontaktabschnitte und entsprechende komplementäre Hupkontakte vorgesehen sein. Der zum Kontaktabschnitt komplementäre Hupkontakt ist bevorzugt am Gassackmodul angeordnet, kann aber selbstverständlich auch am Lenkrad plaziert sein.

Es bietet sich an, entweder das gesamte Rückstellelement oder zumindest den gesamten elastischen Abschnitt elektrisch leitend auszuführen, um den Kontaktabschnitt nicht separat kontaktieren zu müssen.

Der elastische Abschnitt erstreckt sich im montierten Zustand des Gassackmoduls im Lenkrad bevorzugt schräg zwischen dem Gassackmodul und dem Nabenbereich des Lenkrads. Durch diese Anordnung ergibt sich z.B. bei der Verwendung eines federnden Drahtes als Rückstellelement bei einer Auslenkung des Gassackmoduls automatisch eine Rückstellkraft. Auf Spiralfedern kann so verzichtet werden.

In einer bevorzugten Ausführungsform der Erfindung ist der elastische Abschnitt in einer ersten ausgelenkten Position, in der eine erste Rückstellkraft erzeugt wird, in Kontakt mit einem komplementären Hupkontakt.

Die Montage des Gassackmoduls am Lenkrad läßt sich vereinfachen, indem vorgesehen ist, daß der elastische Abschnitt in eine zweite ausgelenkte Position bewegbar ist, in der eine zweite Rückstellkraft erzeugt wird, die größer ist als die erste Rückstellkraft. Gewöhnlich wird in der zweiten ausgelenkten Position der elastische Abschnitt stärker durchgebogen sein als in der ersten ausgelenkten Position. Diese Anordnung erlaubt es, in der zweiten ausgelenkten Position eine Rastverbindung zwischen einem Befestigungselement des Gassackmoduls und dem Lenkrad zu schließen. Diese sogenannte Überdrückbarkeit des elastischen Abschnitts gewährleistet ein sicheres Einrasten von Befestigungselementen, die das Gassackmodul am Lenkrad, genauer gesagt z.B. an dessen Skelett, fixieren. Bei den Befestigungselementen handelt es sich bevorzugt um gegenüber dem Rückstellelement separate Bauteile. Durch die starke Rückstellkraft in der zweiten ausgelenkten Position wird das Gassackmodul nach der Montage am Lenkrad aus der Montageposition (die der zweiten ausgelenkten Position entspricht) in seine Normalstellung bewegt.

Unabhängig von der Befestigung des Gassackmoduls am Lenkrad kann auch die Verbindung zwischen dem elastischen Abschnitt und dem Gassackmodul und/oder dem Lenkrad eine Rastverbindung sein.

Bevorzugt ist hierzu die Befestigung des Rückstellelements im Nabenbereich des Lenkrads durch einen geschäumten Abschnitt des Lenkrads gebildet, mit dem ein Ende des elastischen Abschnitts verrasten kann. Auf diese Weise läßt sich sowohl die Rastverbindung zur Befestigung des Gassackmoduls am Lenkrad als auch die Rastverbindung zur festen Verbindung des elastischen Abschnitts des Rückstellelements mit dem Lenkrad durch einfaches Einschieben des Gassackmoduls in den Nabenbereich des Lenkrades herstellen. Die Rastverbindung zwischen dem elastischen Abschnitt und dem geschäumten Abschnitt muß hierbei nicht so hohen Kräften standhalten können wie die Rastverbindung zur Befestigung des Gassackmoduls.

Das Rückstellelement bzw. dessen elastischer Abschnitt kann auch am Modulgehäuse verrastet sein. Bevorzugt ist jedoch das modulgehäusefeste Ende des elastischen Abschnitts in das Modulgehäuse eingebettet, z.B. durch Umgießen oder Umspritzen. Diese Lösung bietet sich vor allem an, wenn das Modulgehäuse aus Kunststoff besteht.

Es ist auch möglich, das Rückstellelement zuerst fest mit dem Lenkrad und anschließend über eine Rastverbindung mit dem Gassackmodul zu verbinden. Hierzu könnte z.B. ein Ende des Rückstellelements in ein Kunststoff- oder Schaumteil im Nabenbereich des Lenkrads eingebettet sein.

Vorzugsweise erstrecken sich der oder die elastischen Abschnitte im wesentlichen radial. So entsteht eine gleichmäßige Rückstellkraft und eine spielarme Führung ohne Verkippung des Gassackmoduls. Bei dem Rückstellelement kann es sich z.B. um einen einteiligen, gebogenen Draht handeln.

Um Kurzschlüsse zu vermeiden, ist das Rückstellelement außerhalb des Kontaktabschnittes und natürlich einer entsprechenden Kontaktierung zu einem Hupenstromkreis bevorzugt gegenüber dem Gassackmodul bzw. dem Lenkrad isoliert. Die Verwendung eines Modulgehäuses aus Kunststoff vereinfacht hierbei die Isolierung.

Das Rückstellelement kann erfindungsgemäß drei Funktionen übernehmen. Zum einen erzeugt es die Rückstellkraft bei einer Betätigung der Hupe, zum zweiten kann es eine Funktion als Führung für das Gassackmodul bei der axialen Bewegung des Gassackmoduls erfüllen und zum dritten bildet es bevorzugt die eine Hälfte der Hupkontakte.

Weitere Vorteile und Merkmale der Erfindung ergeben sich aus der nachfolgenden Beschreibung eines Ausführungsbeispiels in Verbindung mit den beigefügten Zeichnungen. In diesen zeigen:
- Figur 1 eine schematische perspektivische Teilansicht eines Gassackmoduls einer erfindungsgemäßen Baugruppe von dessen Unterseite gesehen;
- Figur 2 eine schematische perspektivische Teilansicht eines Modulgehäuses für ein Gassackmodul einer erfindungsgemäßen Baugruppe gemäß einer Variante zu dem in Figur 1 gezeigten Gehäuse;
- Figur 3 eine teilgeschnittene Ansicht einer erfindungsgemäßen Baugruppe in einem Zustand, in dem das Gassackmodul nach Figur 1 oder 2 mit dem Lenkrad verbunden und die Hupe nicht betätigt ist;
- Figur 4 die Baugruppe aus Figur 3 in einem Zustand, in dem das Gassackmodul mit dem Lenkrad verbunden und die Hupe betätigt ist; und
- Figur 5 die Baugruppe aus Figur 3 in einem Zustand, in dem das Gassackmodul gerade mit dem Lenkrad verbunden wird.

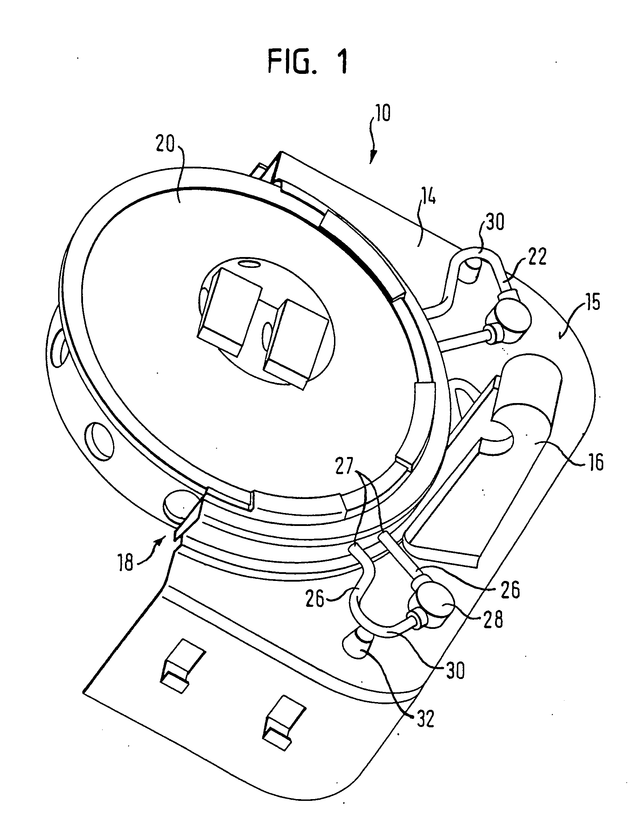

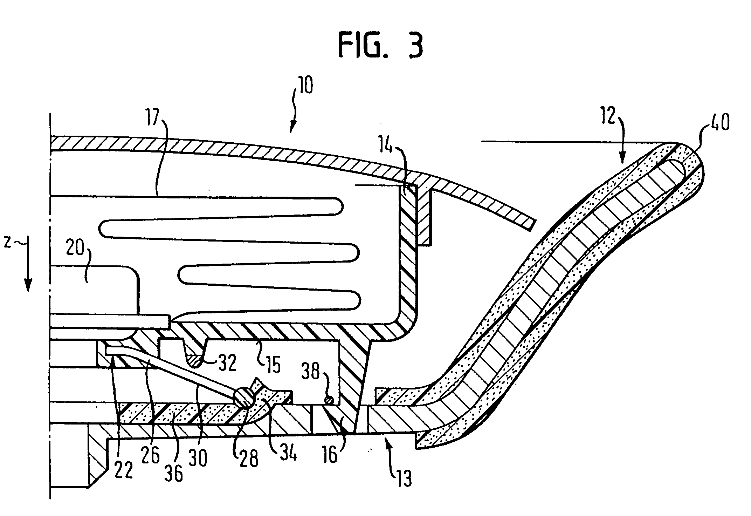

Figur 1 zeigt die Unterseite eines Gassackmoduls 10, wie es z.B. in ein in den Figuren 3 bis 5 gezeigtes Lenkrad 12 eingesetzt werden kann.

Ein Modulgehäuse 14, das hier durch einen aus Kunststoff bestehenden Generatorträger gebildet ist, weist an seiner Unterseite 15 Rasthaken 16 zur Befestigung des Gassackmoduls am Lenkrad 12 auf. Außerdem ist eine Aufnahme 18 für einen Gasgenerator 20 ausgebildet, in der der Gasgenerator 20 auf bekannten Weise fixiert ist. Im Inneren des Modulgehäuses 14 ist ein gefalteter Gassack 17 aufgenommen (siehe Figur 3).

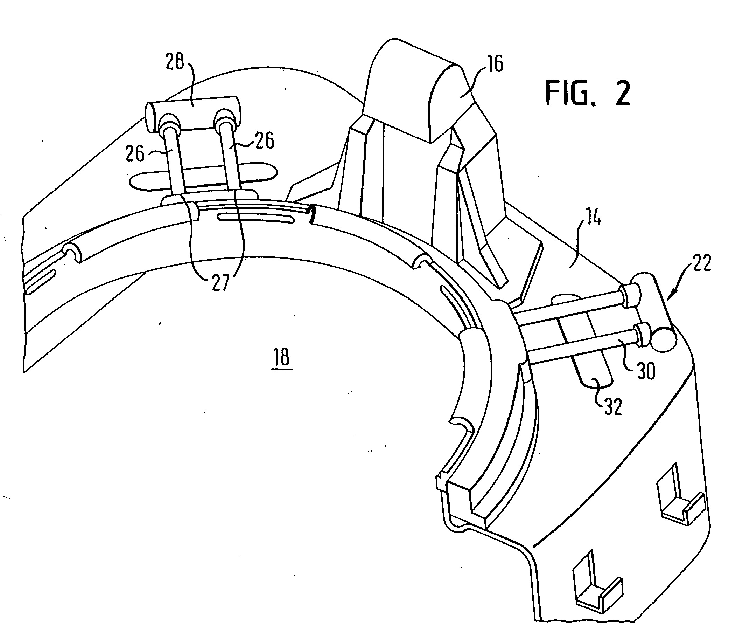

An der Unterseite 15 des Modulgehäuses 14, hier an der den Gasgenerator 20 umfangsmäßig umgebenden Aufnahme 18 sind mehrere federnde Rückstellelemente 22 angeordnet. Jedes Rückstellelement 22 weist zwei elastische Abschnitte 26 auf, die jeweils an einem ersten Ende 27 fest und unverschiebbar mit dem Modulgehäuse 14 verbunden sind. In dem in den Figuren 1 und 2 gezeigten Beispiel können die Rückstellelemente 22 über Rastverbindungen mit dem Modulgehäuse 14 verbunden sein, während sie in dem in den Figuren 3 bis 5 gezeigten Gassackmodul 10 in das Modulgehäuse 14 konkret durch Umspritzen oder Umgießen eingebettet sind. Die Rückstellelemente könnten aber auch auf andere geeignete Weise, z.B. über einen Umformprozeß, mit dem Modulgehäuse 14 fest verbunden sein.

Die Rückstellelemente 22 bestehen im wesentlichen aus einem einstückigen, in eine entsprechende Form gebogenen federnden Draht. Die elastischen Abschnitte 26 der Rückstellelemente 22 erstrecken sich im wesentlichen in radialer Richtung, solange das Gassackmodul 10 nicht mit dem Lenkrad 12 verbunden ist. Jeweils zwei der elastischen Abschnitte 26 sind durch einen punktförmigen Befestigungsabschnitt 28 verbunden, der ein zweites Ende jedes elastischen Abschnitts bildet. Ist das Gassackmodul 10 in das Lenkrad 12 eingesetzt, verlaufen die elastischen Abschnitte 26 schräg von der Unterseite 15 des Modulgehäuses 14 zum Nabenbereich 13 des Lenkrads 12.

Bei dem in Figur 1 gezeigten Beispiel weist jeweils einer der elastischen Abschnitte 26 einen bogenförmig gekrümmten Kontaktabschnitt 30 auf, der einen Hupkontakt bildet.

In Figur 2 ist eine Variante des Rückstellelements 22 dargestellt, bei der die elastischen Abschnitte 26 parallel zueinander radial nach außen verlaufen und sich der Befestigungsabschnitt 28 senkrecht zu den elastischen Abschnitten 26 erstreckt. Hier ist an jedem der elastischen Abschnitte 26 ein Kontaktabschnitt 30 als Hupkontakt ausgebildet.

In den gezeigten Ausführungsformen sind jeweils mehrere Kontaktabschnitte 30 vorgesehen. Jeder der Kontaktabschnitte 30 kann in Berührung mit komplementären Hupkontakten 32 kommen, die hier als separate Vorsprünge an der Unterseite 15 des Modulgehäuses 14 ausgebildet bzw. in das Modulgehäuse 14 eingebettet sind. Bei der in Figur 1 gezeigten Variante ist jeweils nur ein Kontaktabschnitt 30 einem komplementären Hupkontakt 32 zugeordnet, während es bei der in Figur 2 gezeigten Variante jeweils zwei Kontaktabschnitte 30 sind.

Die Hupkontakte 30, 32 sind auf dem Fachmann bekanntem Weg mit einem nicht gezeigten Hupenstromkreis verbunden. Die Hupkontakte 30, 32 und der Hupenstromkreis sind so ausgelegt, daß bei einer Berührung eines Kontaktabschnitts 30 mit einem Hupkontakt 32 die Hupe ertönt.

Die Befestigungsabschnitte 28 sind gegenüber den freien Abschnitten 26 isoliert, die ganz oder teilweise (zumindest aber im Bereich der Kontaktabschnitte 30) elektrisch nicht isoliert sind. Die Rückstellelemente 22 sind gegenüber dem Modulgehäuse 14 elektrisch isoliert. Bei einem aus Kunststoff bestehenden Modulgehäuse 14 bedarf es hierzu keiner weiteren Vorkehrungen, bei einem metallischen Modulgehäuse sind dem Fachmann bekannte Vorkehrungen zur elektrischen Isolierung zu treffen. Die Isolierung der Rückstellelemente 22 kann z.B. durch eine Kunststoffumspritzung in allen Bereichen außer den Kontaktabschnitten 30 verwirklicht sein.

Die Figuren 3 bis 5 zeigen eine Baugruppe, bei der das Gassackmodul 10 in einen Nabenbereich 13 eines Lenkrads 12 eingesetzt ist.

Das Gassackmodul 10 ist über die Rasthaken 16 und im Nabenbereich 13 des Lenkrads 12 angeordnete lenkradfeste Arretierungsmittel 38 fest mit dem Lenkrad 12 verbunden. Die Arretierungsmittel 38 bestehen hier aus einem im Lenkrad 12 fest gehalterten, aber um einen gewissen Betrag verschieblichen Bauteil (z.B. einem Draht), in das die Rasthaken 16 eingreifen. Diese Verbindung ist so ausgelegt, daß eine Bewegung des Gassackmoduls 10 in Vertikalrichtung z (d.h. in Richtung der Drehachse des Lenkrads) innerhalb des Lenkrades 12 ermöglicht ist, ohne daß die Rastverbindung 16, 38 gelöst wird.

Die Befestigungsabschnitte 28 der Rückstellelemente 22 sind mit taschenförmigen Befestigungen 34 verbunden, die durch geschäumte Abschnitte 36 im Lenkradinneren ausgebildet sind und Aufnahmen für die Befestigungsabschnitte 28 bilden. Die elastischen Abschnitte 26 der Rückstellelemente 22 erstrecken sich schräg zwischen dem Gassackmodul 10 und dem Nabenbereich 13 des Lenkrads 12.

Die elastischen Abschnitte 26 sind so ausgelegt, daß die Kraft, die einer Bewegung des Gassackmoduls 10 in Achsrichtung (z-Richtung) entgegengesetzt wird, einerseits so groß ist, daß das Gassackmodul 10 nicht aufgrund von Fahrzeugzeugschwingungen im Lenkrad 12 in Bewegung versetzt wird, andererseits aber so gering ist, daß der Fahrer das Gassackmodul 10 zur Betätigung der Hupe ohne großen Kraftaufwand niederdrücken kann.

In der in Figur 3 dargestellten Normalstellung ist das Gassackmodul 10 fest mit dem Lenkrad 12 verbunden, und die Hupe ist nicht betätigt. Die elastischen Abschnitte 26 befinden sich in einer nicht ausgelenkten Stellung, und kein Kontaktabschnitt 30 berührt einen komplementären Hupkontakt 32. Die elastischen Abschnitte 26 weisen jedoch eine gewisse Vorspannung auf, die eine spontane Bewegung des Gassackmoduls in Achsrichtung z z.B. aufgrund von Fahrzeugbewegungen unterbindet.

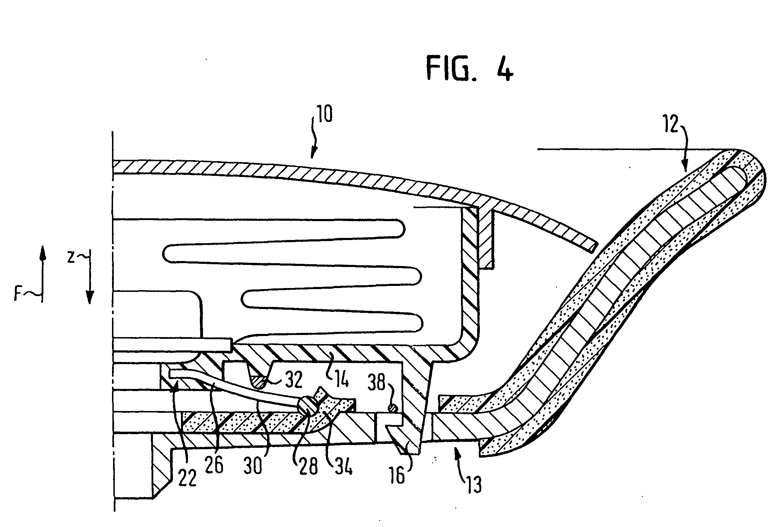

Figur 4 zeigt die Baugruppe aus Figur 3 bei betätigter Hupe. Das Gassackmodul 10 wurde als Ganzes ein Stück in Achsrichtung z verschoben. Diese Bewegung führt dazu, daß die elastischen Abschnitte 26 des Rückstellelements 22 in eine erste Position ausgelenkt sind und eine erste Krümmung angenommen haben. Gleichzeitig hat sich der Abstand zwischen den Kontaktabschnitten 30 und den komplementären Hupkontakten 32 soweit verringert, daß die Kontaktabschnitte 30 und die komplementären Hupkontakte 32 in Berührung miteinander kommen, so daß der Hupenstromkreis geschlossen ist. Das Gassackmodul 10 ist nach wie vor mit dem Lenkrad 12 über die Rastverbindung 16, 38 und die Rückstellelemente 22 verbunden.

Während der Bewegung des Gassackmoduls 10 bleiben die elastischen Abschnitte 26 sowohl mit dem Modulgehäuse 14 als auch mit dem geschäumten Abschnitt 26 des Lenkrads 12 fest und nicht verschieblich verbunden. In diesem Zustand übt das Rückstellelement 22 über seine in eine erste ausgelenkte Position gebogenen, elastischen Abschnitte 26 eine Rückstellkraft F auf das Gassackmodul 10 aus, die bestrebt ist, dieses in seine Normalstellung (siehe Figur 3) zurückzuführen.

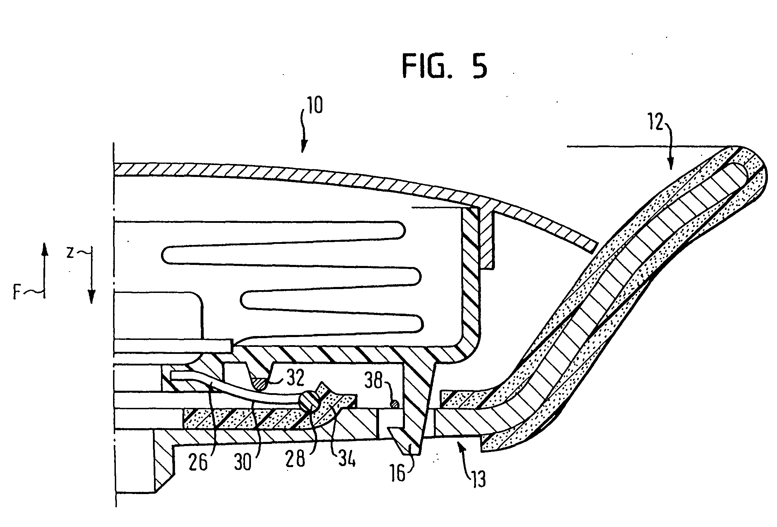

Die in Figur 5 gezeigte Stellung des Gassackmoduls 10 im Lenkrad 12 wird nur bei der Befestigung des Gassackmoduls 10 am Lenkrad 12 eingenommen.

Hierzu wird das Gassackmodul 10 weiter in das Innere des Lenkrads 12 eingeschoben, als dies zur Betätigung der Hupe notwendig ist. Die elastischen Abschnitte 26 des Rückstellelements 22 werden dabei in eine zweite ausgelenkte Position gebogen, in der sie weiter ausgelenkt und stärker gekrümmt sind als in der ersten ausgelenkten Position zur Betätigung der Hupe, woraus eine stärkere Rückstellkraft als in der ersten ausgelenkten Position resultiert. Diese sogenannte Überdrückbarkeit der Rückstellelemente 22 erlaubt es, die Rasthaken 16 sicher in Eingriff mit den Arretierungsmitteln 38 des Lenkrades 12 zu bringen.

Beim Einsetzen des Gassackmoduls 10 in das Lenkrad 12 wird auch gleichzeitig eine Rastverbindung zwischen den Befestigungselementen 28 und der Befestigung 34 im Lenkrad 12 durch einfaches Einschieben geschlossen. Bei der Ausführungsform nach Figur 2 bildet die Befestigung 34 ein Schwenklager für das Rückstellelement 22, in dem der zylindrische Befestigungsabschnitt 28 in eine zylindrische, abschnittsweise offene Befestigung 34 eingesetzt ist (siehe auch Figur 3 bis 5), in der sich der Befestigungsabschnitt 28 drehen kann (siehe Figur 5).

Die Hauptlast der Befestigung des Gassackmoduls 10 am Lenkrad 12 in z-Richtung trägt die Rastverbindung 16, 38, während die Rastverbindung 28, 34 zwischen dem Rückstellelement 22 und dem geschäumten Abschnitt 36 nur geringen Kräften in z-Richtung standhalten muß. Die Fixierung der elastischen Abschnitte 26 am Lenkrad 12 sorgt für eine exakte Führung der Bewegung des Gassacksmoduls 10.

Alternativ ist es auch möglich, die Rückstellelemente im Nabenbereich des Lenkrads zu umspritzen, zu umschäumen oder zu verrasten und eine Rastverbindung mit dem Modulgehäuse vorzusehen, die geschlossen wird, wenn das Gassackmodul in das Lenkrad eingesetzt wird.

Die Richtung z verläuft in den hier gezeigten Beispielen senkrecht zur Ebene eines Lenkradskranzes 40, also in Achsrichtung des Lenkrads 12. Die Erfindung ist jedoch auch für Lenkräder umsetzbar, bei denen die Bewegungsrichtung zur Betätigung der Hupe in einer anderen Richtung erfolgt.

## Patentansprüche

1. Baugruppe, mit einem Lenkrad (12) und einem in einem Nabenbereich (13) des Lenkrads (12) aufgenommenen Gassackmodul (10), das zum Betätigen einer Hupe in Achsrichtung (z) des Lenkrads (12) bewegbar ist, und
mit wenigstens einem Rückstellelement (22), das wenigstens einen elastischen Abschnitt (26) aufweist, der eine entgegen einer Betätigungskraft für die Hupe wirkende Rückstellkraft auf das Gassackmodul (10) ausübt, sich zwischen einem Modulgehäuse (14) und einer im Nabenbereich (13) des Lenkrads (12) vorgesehenen Befestigung (34) für das Rückstellelement (22) erstreckt, fest und nicht verschiebbar an einem Ende (27) mit dem Modulgehäuse (14) und an einem anderen Ende (28) mit der Befestigung (34) im Nabenbereich (13) verbunden ist und zwischen den Enden (27, 28) einen Kontaktabschnitt (30) aufweist, der einen elektrischen Hupkontakt bildet.

2. Baugruppe nach Anspruch 1, **dadurch gekennzeichnet, daß** sich der elastische Abschnitt (26) schräg zwischen dem Gassackmodul (10) und dem Nabenbereich (13) des Lenkrads (12) erstreckt.

3. Baugruppe nach einem der vorhergehenden Ansprüche, **dadurch gekennzeichnet, daß** der elastische Abschnitt (26) in einer ersten ausgelenkten Position, in der eine erste Rückstellkraft erzeugt wird, in Kontakt mit einem komplementären Hupkontakt (32) ist.

4. Baugruppe nach Anspruch 3, **dadurch gekennzeichnet, daß** der elastische Abschnitt (26) in eine zweite ausgelenkte Position bewegbar ist, in der eine zweite Rückstellkraft erzeugt wird, die größer ist als die erste Rückstellkraft.

5. Baugruppe nach Anspruch 4, **dadurch gekennzeichnet, daß** in der zweiten ausgelenkten Position eine Rastverbindung (16, 38) zwischen einem Befestigungselement (16) des Gassackmoduls (10) und dem Lenkrad (12) geschlossen werden kann.

6. Baugruppe nach einem der vorhergehenden Ansprüche, **dadurch gekennzeichnet, daß** die Verbindung zwischen dem Rückstellelement (22) und dem Gassackmodul (10) und/oder der Befestigung (34) des Rückstellelements (22) im Lenkrad (12) eine Rastverbindung (28, 34) ist.

7. Baugruppe nach Anspruch 6, **dadurch gekennzeichnet, daß** die Befestigung (34) durch einen geschäumten Abschnitt (36) des Lenkrads (12) gebildet ist.

8. Baugruppe nach einem der vorhergehenden Ansprüche, **dadurch gekennzeichnet, daß** die Befestigung (34) als Schwenklager für das Rückstellelement (22) ausgebildet ist.

9. Baugruppe nach einem der vorhergehenden Ansprüche, **dadurch gekennzeichnet, daß** der zum Kontaktabschnitt (30) komplementäre Hupkontakt (32) am Gassackmodul (10) angeordnet ist.

10. Baugruppe nach einem der vorhergehenden Ansprüche, **dadurch gekennzeichnet, daß** das modulgehäusefeste Ende (27) des elastischen Abschnitts (26) in das Modulgehäuse (14) des Gassackmoduls (10) eingebettet ist.

11. Baugruppe nach einem der vorhergehenden Ansprüche, **dadurch gekennzeichnet, daß** der elastische Abschnitt (26) ein sich im wesentlichen radial erstreckender drahtförmiger Körper ist.
